# EUROPÄISCHE PATENTANMELDUNG

(11) **EP 3 181 769 A1**
(43) Veröffentlichungstag der Anmeldung: **21.06.2017**
(21) Anmeldenummer: 15201062.5
(22) Anmeldetag: 18.12.2015
(51) Int. Cl.: E04B 1/76

(54) **BEFESTIGUNGSELEMENT ZUM BEFESTIGEN EINER ISOLIERUNG AN EINER WAND**

(71) Anmelder: HILTI Aktiengesellschaft, 9494 Schaan (LI)
(72) Erfinder: Miescher, Stefan, 9494 Schaan (LI); Popp, Uwe, 9443 Widnau (CH); von Monkiewitsch, Matthias, 6900 Bregenz (AT)
(74) Vertreter: Hilti Aktiengesellschaft Corporate Intellectual Property

(57) **Zusammenfassung**

Mit einem Befestigungselement (1) zum Befestigen eines schichtförmigen Bauteiles, insbesondere einer Isolierung, an einem Setzgegenstand, insbesondere an einer Wand oder Decke eines Gebäudes, mit einem Setzelement (8), insbesondere einem Nagel (10) oder einer Schraube, das Befestigungselement (1) umfassend: einen Schaft (12), eine Öffnung (13) zur Aufnahme des Setzelementes (8), einen Anschlag (23) zur formschlüssigen Befestigung des Setzelementes (8), ein Abschlusselement (16) zur Auflage auf eine Außenseite (6) des schichtförmigen Bauteiles (4), wobei der Schaft (12) und das Abschlusselement (16) einteilig ausgebildet sind, soll eine Isolierung als ein schichtförmiges Bauteil zuverlässig auch bei Rissen in dem Befestigungselement (1) mit einem geringen Arbeitsaufwand an der Wand oder Decke als Setzgegenstand befestigt werden können.

Diese Aufgabe wird dadurch gelöst, dass der Schaft (12) wenigstens zwei Segmente (15) umfasst und zwischen den wenigstens zwei Segmenten (15) je eine Zwischenöffnung (18) ausgebildet ist.

## Beschreibung

Die vorliegende Erfindung betrifft ein Befestigungselement zum Befestigen eines schichtförmigen Bauteiles an einem Setzgegenstand gemäß dem Oberbegriff des Anspruches 1 und ein Verfahren zum Befestigen eines schichtförmigen Bauteiles an einem Setzgegenstand gemäß dem Oberbegriff des Anspruches 15.

Im Bauwesen ist es erforderlich, an Wänden oder Decken von Gebäuden als einem Setzgegenstand eine Isolierung als ein schichtförmiges Bauteil zu befestigen. Die Isolierung dient im Allgemeinen als Wärmeisolierung für die Wand oder Decke als Setzgegenstand des Gebäudes und wird außenseitig auf der Wand oder Decke befestigt. Hierzu werden Befestigungselemente mit Setzelementen an der Wand oder Decke befestigt. Die Befestigungselemente aus Kunststoff umfassen einen Schaft und ein Abschlusselement. Das Abschlusselement liegt nach dem Befestigen auf einer Außenseite der Isolierung auf und der Schaft ist innerhalb eines Durchgangslochs an der Isolierung angeordnet. Das Setzelement aus Metall ist in der Wand oder Decke befestigt und das Setzelement liegt an einem Anschlag des Befestigungselementes auf, so dass das Befestigungselement mittels des Setzelementes mittelbar an dem Setzgegenstand befestigt ist. Dadurch kann die Isolierung beispielsweise an der Wand oder der Decke befestigt werden.

Während des Befestigens der Befestigungselemente mittels der Setzelemente kann es zu Beschädigungen an dem Schaft des Befestigungselements kommen. Derartige Beschädigungen treten insbesondere an einem ersten Endbereich des Schaftes auf. Diese Beschädigungen können Risse an dem Schaft verursachen und bei einer sich ausbildenden Vergrößerung der Risse aufgrund der Zugbeanspruchung des Schaftes des Befestigungselements kann dies zum vollständigen Versagen des Schaftes und damit auch des Befestigungselements zum Befestigen des schichtförmigen Bauteils an dem Setzgegenstand führen.

Die EP 0 302 909 B1 zeigt ein Befestigungselement mit einer großflächigen Unterlegscheibe und einem an dieser ausgebildeten, rohrförmigen Fortsatz zum Durchtritt und zur teleskopartig verschiebbaren Führung einer Schraube, wobei der freie Innendurchmesser des Fortsatzes über dessen größte Länge annähernd dem Außendurchmesser des Kopfes der einzusetzenden Schraube entspricht, wobei die Unterlegscheibe und der rohrförmige Fortsatz als getrennt gefertigte Teile ausgeführt sind und der rohrförmige Fortsatz an seinem, der Unterlegscheibe zugewandten Ende einen Bund, vorspringende Nasen, Zapfen, Noppen oder dergleichen aufweist und der an diesen Endbereich anschließende Abschnitt des rohrförmigen Fortsatzes annähernd dem Durchgangsquerschnitt eine Öffnung in der Unterlegscheibe entspricht, wobei die Unterlegscheibe nach Art eines Gelenkes gegenüber dem rohrförmigen Fortsatz kippbar ist und dass das freie Ende des Fortsatzes zur Herstellung einer reibungsschlüssigen Halterung zwischen Fortsatz und eingesetzter Schraube auf den Schaft- bzw. Gewindeaußendurchmesser der einzusetzenden Schraube verengt ist, so dass die rohrförmigen Fortsätze mit eingesetzten Schrauben vormagazinierbar sind.

Die Aufgabe der vorliegenden Erfindung besteht deshalb darin, ein Befestigungselement und ein Verfahren zur Verfügung zu stellen, bei dem eine Isolierung als ein schichtförmiges Bauteil zuverlässig auch bei Rissen in dem Befestigungselement mit einem geringen Arbeitsaufwand an einer Wand oder Decke als Setzgegenstand befestigt werden kann.

Diese Aufgabe wird gelöst mit einem Befestigungselement zum Befestigen eines schichtförmigen Bauteiles, insbesondere einer Isolierung, an einem Setzgegenstand, insbesondere an einer Wand oder Decke eines Gebäudes, mit einem Setzelement, insbesondere einem Nagel oder einer Schraube, das Befestigungselement umfassend einen Schaft, eine Öffnung zur Aufnahme des Setzelementes, einen Anschlag zur formschlüssigen Befestigung des Setzelementes, ein Abschlusselement zur Auflage auf eine Außenseite des schichtförmigen Bauteiles, wobei der Schaft und das Abschlusselement einteilig ausgebildet sind, wobei der Schaft wenigstens zwei Segmente umfasst und zwischen den wenigstens zwei Segmenten je eine Zwischenöffnung ausgebildet ist. Der Schaft ist in einem Schnitt senkrecht zu der Längsachse des Schafts oder des Befestigungselements in wenigstens zwei Segmente unterteilt und zwischen den wenigstens zwei Segmenten ist je eine Zwischenöffnung ausgebildet. Insgesamt weist das Befestigungselement also ein, zwei, drei, vier oder mehr Zwischenöffnungen auf. Bei Beschädigungen während des Befestigens des Befestigungselements mit dem Setzelement an dem Setzgegenstand, insbesondere an einem ersten Endbereich des Schafts, führen Risse an dem Schaft lediglich zu einem Versagen nur eines Segments des Schafts. Da jedoch der Schaft mehrere Segmente umfasst, ist dadurch das Befestigungselement weiterhin tragfähig und es tritt kein Versagen des Befestigungselements auf. Beschädigungen an dem Schaft, insbesondere an einem ersten Endbereich des Schaftes, welcher zu Rissen an dem Schaft führen, bedingen dadurch in vorteilhafter Weise kein vollständiges Versagen des Schaftes bzw. des Befestigungselements. Durch die Unterteilung des Schaftes in einzelne Segmente tritt somit nur das Versagen wenigstens eines Segmentes aufgrund einer Rissbildung in diesem Segment auf. In Umfangsrichtung des Schaftes an den wenigstens zwei Segmenten kann somit ein Riss in einem Segment sich nicht über die gesamte Umfangsrichtung an dem Schaft fortpflanzen, sodass dadurch im Regelfall nur an einem Segment ein Versagen auftritt, sodass aufgrund des vorhandenen wenigstens einen anderen voll funktionsfähigen Segments das Befestigungselement weiterhin ausreichend tragfähig ist. Die wenigstens zwei Segmente sind dabei insbesondere konstruktiv dahingehend ausgelegt, dass bereits wenigstens ein Segment für die notwendige Zugfähigkeit des Befestigungselements ausreichend ist. Als ein Anschlag wird vorzugsweise jede Befestigungsgeometrie an dem Befestigungselement zur formschlüssigen Befestigung des Setzelementes an dem Befestigungselement betrachtet.

In einer zusätzlichen Ausführungsform ist die wenigstens eine Zwischenöffnung als ein Schlitz ausgebildet. Die wenigstens zwei Segmente sind bandförmig ausgebildet, sodass die wenigstens eine Zwischenöffnung zwischen den wenigstens zwei Segmenten als ein Schlitz ausgebildet ist. Der Schaft weist eine Ausdehnung in einer axialen Richtung des Befestigungselements auf, sodass für eine ausreichende Sicherheit des Schaftes eine ausreichend große Ausdehnung der wenigstens zwei Segmente und des wenigstens einen Schlitzes notwendig ist.

In einer zusätzlichen Variante ist bzw. sind der wenigstens eine Schlitz und/oder die wenigstens zwei Segmente im Wesentlichen parallel zu einer Längsachse des Schaftes ausgebildet.

Vorzugsweise ist der Schlitz durchgehend ausgebildet, so dass in einem Schnitt senkrecht zu der Längsachse des Schaftes keine Verbindung zwischen den Segmenten vorhanden ist und/oder der Schaft wenigstens drei oder vier Segmente umfasst. Zwischen den wenigstens zwei Segmenten, insbesondere in den Bereichen, in denen die Gefahr von Beschädigungen am größten ist, ist in Umfangsrichtung keine Verbindung vorhanden, sodass dadurch ein Riss in einem Segment sich nicht auf ein anderes Segment fortpflanzen kann.

In einer zusätzlichen Ausgestaltung sind die Öffnung und/oder der Anschlag an dem Schaft, insbesondere an einem ersten Endbereich des Schaftes, ausgebildet. Die Öffnung, insbesondere als eine Bohrung mit einem beliebigen Querschnitt ausgebildet, dient zur Durchführung eines Schaftes des Setzelements und der Anschlag dient zur formschlüssigen Befestigung des Setzelements, indem ein Haltekopf des Setzelements auf dem Anschlag aufliegt. Die Öffnung und der Anschlag sind dabei an dem Schaft ausgebildet, da der Schaft an dem ersten Endbereich beim Befestigen an dem Setzgegenstand einen sehr kleinen Abstand zu dem Setzgegenstand aufweist.

In einer zusätzlichen Ausgestaltung ist das Abschlusselement an einem zweiten Endbereich des Schaftes mit dem Schaft verbunden. Der zweite Endbereich des Schaftes ragt beim Befestigen bzw. nach dem Befestigen aus einem Durchgangsloch des schichtförmigen Bauteils heraus, sodass das Abschlusselement an dem zweiten Endbereich des Schaftes mit dem Schaft verbunden ist.

In einer zusätzlichen Ausgestaltung ist das Abschlusselement als ein tellerförmiges Auflageteil ausgebildet. Das tellerförmige Auflageteil kann dabei entweder mit Aussparungen ausgebildet sein oder das tellerförmige Auflageteil kann auch aus einem Vollmaterial ohne Aussparungen ausgebildet sein.

In einer ergänzenden Variante ist die Öffnung als eine Bohrung zur Aufnahme eines Setzelementschaftes ausgebildet und ein erstes Ende der Bohrung ist an einem ersten Ende des Befestigungselementes ausgebildet und im Bereich eines zweites Ende der Bohrung ist der Anschlag ausgebildet. Die Bohrung weist einen beliebigen Querschnitt auf, ist beispielsweise im Querschnitt kreisförmig, quadratisch oder dreieckförmig ausgebildet und dient zur Durchführung eines Setzelementschaftes.

In einer ergänzenden Ausgestaltung beträgt die axiale Ausdehnung der wenigstens zwei Segmente und/oder der wenigstens einen Zwischenöffnung wenigstens 10 %, 20 %, 30 %, 50 %, 60 %, 70 % oder 80 % der axialen Gesamtausdehnung des Befestigungselementes. Eine ausreichende axiale Ausdehnung der wenigstens zwei Segmente und/oder der wenigstens einen Zwischenöffnung ist für eine ausreichende Sicherheit des Schaftes gegen ein Versagen aufgrund von Rissbildung notwendig.

In einer zusätzlichen Ausgestaltung weist die wenigstens eine Zwischenöffnung ein erstes Ende und ein zweites Ende auf und das erste Ende ist ein dem Abschlusselement abgewandtes Ende und das zweite Ende ist ein dem Abschlusselement zugewandtes Ende der wenigstens einen Zwischenöffnung.

In einer weiteren Ausführungsform ist die axiale Ausdehnung von dem ersten Ende des Befestigungselementes bis zu dem zweiten Ende der wenigstens einen Zwischenöffnung größer oder gleich als die axiale Ausdehnung der Öffnung. Das Risiko des Versagens des Schaftes aufgrund einer Rissbildung an dem Schaft kann dadurch aufgrund dieser geometrischen Ausbildung wesentlich reduziert werden.

In einer ergänzenden Variante ist die axiale Ausdehnung von dem ersten Ende des Befestigungselementes bis zu dem zweiten Ende der wenigstens einen Zwischenöffnung größer als das 1,2-, 1,5- oder 2-Fache der axialen Ausdehnung der Öffnung.

Zweckmäßig ist an dem Abschlusselement, insbesondere einem Zentrumsbereich des Abschlusselementes, eine Einführöffnung zur Einführung des Setzelementes ausgebildet und/oder innerhalb des Schaftes ist ein von den wenigstens zwei Segmenten begrenzter Durchführkanal zur Durchführung des Setzelementes ausgebildet. Der Durchführkanal dient zur Durchführung des Setzelements zu der Öffnung, welche innerhalb des Schaftes bzw. an dem Durchführkanal angeordnet ist und dort endet.

In einer ergänzenden Ausgestaltung ist das gesamte Befestigungselement einteilig ausgebildet und/oder das Befestigungselement ist, insbesondere ausschließlich, aus, vorzugsweise thermoplastischen, Kunststoff ausgebildet. Aufgrund der einteiligen Ausbildung des gesamten Befestigungselements kann das Befestigungselement besonders preiswert, beispielsweise mittels Spritzgießen aus thermoplastischem Kunststoff, hergestellt werden. Das Befestigungselement wird somit mit einem Spritzgusswerkzeug hergestellt und aufgrund der Geometrie des Schaftes mit dem wenigstens einen Segment und der wenigstens einen Zwischenöffnung kann das Spritzgusswerkzeug dahingehend ausgebildet werden, dass während des Spritzgussvorgangs ein Biegen des Spritzgusswerkzeugs innerhalb des Schaftes im Wesentlichen reduziert ist, sodass dadurch die einzelnen Segmente des Schaftes eines im Wesentlichen konstante radiale Ausdehnung aufweisen. Ein Biegen des Kerns des Spritzgusswerkzeugs innerhalb des Schaftes tritt somit im Wesentlichen nicht oder nur deutlich reduziert auf.

Erfindungsgemäßes Verfahren zum Befestigen eines schichtförmigen Bauteiles, insbesondere einer Isolierung, an einem Setzgegenstand, insbesondere an einer Wand oder Decke eines Gebäudes, mit einem Befestigungselement und einem Setzelement mit den Schritten: Durchführen eines Setzelementes durch eine Einführöffnung an einem Abschlusselement des Befestigungselementes, Durchführen eines Setzelementschaftes durch eine Öffnung des Befestigungselementes, Befestigen des Befestigungselementes an dem Setzgegenstand indem ein Setzelement in dem Setzgegenstand befestigt wird und das Setzelement formschlüssig an einem Anschlag des Befestigungselementes befestigt wird, Auflegen einer ersten Seite des Abschlusselementes auf eine Außenseite des schichtförmigen Bauteiles, so dass das schichtförmige Bauteil von dem Abschlusselement formschlüssig gehalten ist, wobei das Verfahren mit einem in dieser Schutzrechtsanmeldung beschriebenen Befestigungselement ausgeführt wird.

In einer ergänzenden Variante wird zuerst das schichtförmige Bauteil auf den Setzgegenstand aufgelegt und anschließend wird das Setzelement in dem Setzgegenstand befestigt und vorzugsweise wird vor der Befestigung des Setzelementes das Setzelement durch eine Öffnung an dem Befestigungselement durchgeführt. Eine Bohrung für das Setzelement in dem Setzgegenstand wird im Allgemeinen mittels eines Bohrers hergestellt vor dem Setzen des Setzelements.

In einer zusätzlichen Ausgestaltung ist das Setzelement eine Schraube und die Schraube wird mit einem Schrauber, insbesondere Akkuschrauber, als Setzgerät in dem Setzgegenstand mittels Einschrauben befestigt.

In einer ergänzenden Variante wird in den Setzgegenstand eine Bohrung eingebohrt und anschließend wird die Schraube mit einem Dübel in der Bohrung befestigt.

In einer zusätzlichen Ausgestaltung ist das Setzelement ein Bolzen oder ein Nagel und der Bolzen oder Nagel wird mit einem Setzgerät als Schlaghammer in dem Setzgegenstand befestigt.

Im Nachfolgenden werden Ausführungsbeispiele der Erfindung unter Bezugnahme auf die beigefügten Zeichnungen näher beschrieben. Es zeigen:

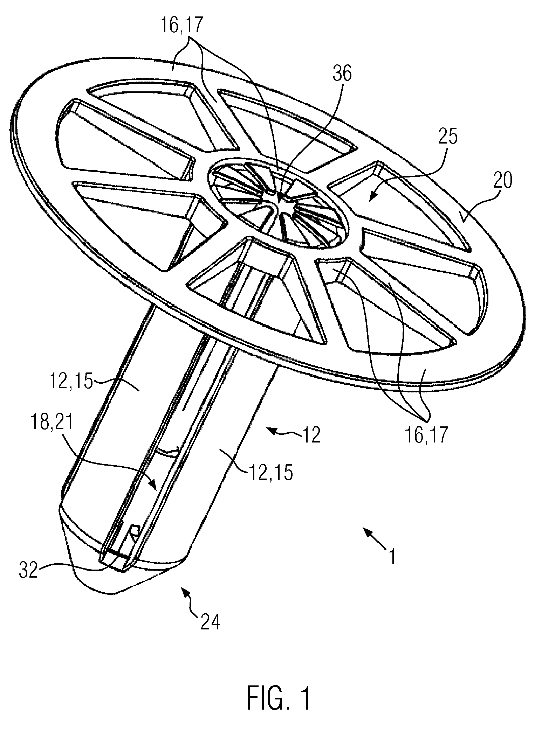

- Fig. 1: einen perspektivische Ansicht eines Befestigungselementes,

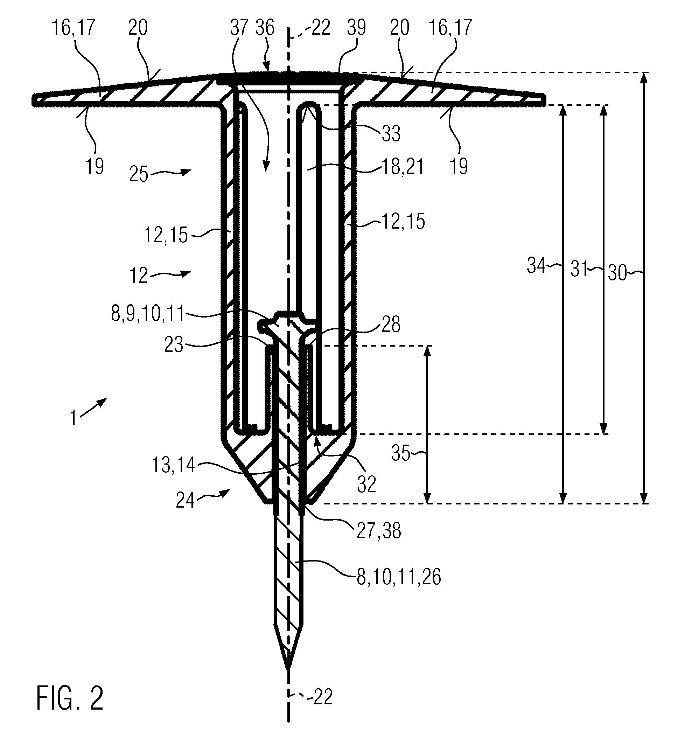

- Fig. 2: einen Längsschnitt des Befestigungselementes gemäß Fig. 1,

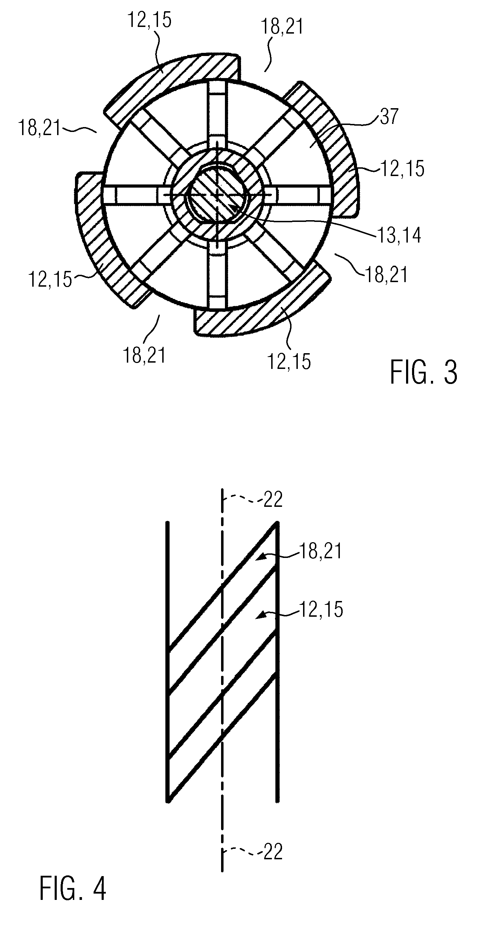

- Fig. 3: eine Querschnitt an einem Schaft des Befestigungselementes gemäß Fig. 1,
- Fig. 4: eine Seitenansicht des Schaftes des Befestigungselementes in einem zweiten Ausführungsbeispiel,
- Fig. 5: einen Schnitt durch eine Wand und eine Isolierung nach dem Befestigen eines Bolzens als Setzelement.

Ein Befestigungselement 1 dient zum Befestigen eines schichtförmigen Bauteils 4, nämlich einer Isolierung 5 an einer Wand 3 eines Gebäudes als einem Setzgegenstand 2. Ein Setzelement 8 ist von einer Schraube 10 oder einem Bolzen 11 bzw. Nagel 11 gebildet und am Ende der Schraube 10 bzw. des Bolzens 11 ist ein Haltekopf 9 ausgebildet und das Setzelement 8 weist außerdem einen Setzelementschaft 26 auf. Das Setzelement 8 ist aus Metall ausgebildet. Das Befestigungselement 1 ist aus Kunststoff ausgebildet.

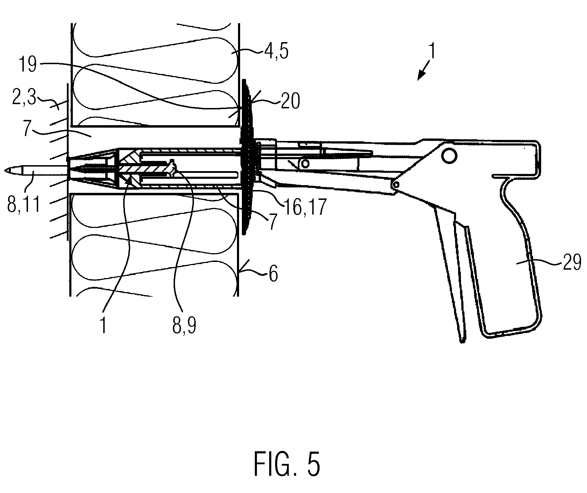

Das einteilige Befestigungselement 1, welches vollständig aus thermoplastischem Kunststoff ausgebildet ist, umfasst einen stangenförmigen Schaft 12 und ein Abschlusselement 16. Das Abschlusselement 16 ist tellerförmig ausgebildet und bildet damit ein tellerförmiges Auflageteil 17 und in dem tellerförmigen Auflageteil 17 sind einzelne Aussparungen ausgebildet zur Reduzierung des Gewichts des tellerförmigen Auflageteils 17. Das Abschlusselement 16 weist eine erste Seite 19 zur Auflage und Befestigung des schichtförmigen Bauteils 4 auf und eine zweite Seite 20. Die zweite Seite 20 des Abschlusselements 16 ist gegenüberliegend zu der ersten Seite 19 des Abschlusselements 16. Der Schaft 12 weist einen ersten Endbereich 24 und einen zweiten Endbereich 25 auf. Bei der Befestigung des Befestigungselements 1 an der Wand 3 (Fig. 5) ist der erste Endbereich 24 an der Wand 3 ausgebildet bzw. der erste Endbereich 24 liegt auf der Wand 3 auf. Der zweite Endbereich 25 an dem anderen Endbereich des Schaftes 12 ist außerhalb eines Durchgangslochs 7 der Isolierung 5 angeordnet und an diesem zweiten Endbereich 25 ist das Abschlusselement 16 an dem Schaft 12 befestigt. Das Befestigungselement 1 weist ein erstes Ende 38 abgewandt zu dem Abschlusselement 16 und ein zweites Ende 39 auf. Der Schaft 12 ist an einem axialen Abschnitt des Schaftes 12 in vier Segmente 15 unterteilt. Die einzelnen Segmente 15 sind dabei koaxial und/oder konzentrisch zu einer axialen Längsachse 22 des Schaftes 12 und des Befestigungselements 1 ausgebildet. Zwischen den einzelnen Segmenten 15 sind daher Zwischenöffnungen 18 vorhanden. Aufgrund der bandförmigen Ausbildung der Segmente 12 bzw. der wesentlichen größeren axialen Ausdehnung der Segmente 12 als deren radiale Ausdehnung und/oder Ausdehnung in Umfangsrichtung ist zwischen den Segmenten 15 die Zwischenöffnung 18 als ein Schlitz 21 ausgebildet. Der Schaft 12 umfasst somit vier Segmente und drei Schlitze 21 zwischen den einzelnen Segmenten 15. An dem ersten Endbereich 24 des Schaftes 12 ist von dem thermoplastischen Kunststoff eine Befestigungs- und Führungsvorrichtung für das Setzelement 8 ausgebildet.

Die Befestigungsvorrichtung umfasst einen Anschlag 23 zur formschlüssigen Auflage des Haltekopfes 9 des Setzelements 8. Als Führungsvorrichtung für das Setzelements 8 ist eine Öffnung 13 ausgebildet und die Öffnung 13 ist als eine Bohrung 14 ausgebildet, deren axiale Ausdehnung in Richtung der Längsachse 22 wesentlich größer ist als der Durchmesser bzw. die radiale Ausdehnung der Bohrung 14. Die Öffnung 13 weist ein erstes Ende 27 und ein zweites Ende 28 auf. Das zweite Ende 28 endet innerhalb eines von den Segmenten 12 begrenzten Durchführkanals 37 zur Durchführung des Setzelements 8. Das erste Ende 27 der Bohrung 14 bzw. der Öffnung 13 ist nach der Befestigung an der Wand 3 angeordnet. Die Zwischenöffnung 18 weist ein dem Abschlusselement 16 abgewandtes erstes Ende 32 auf und ein dem Abschlusselement 16 zugewandtes zweite Ende 33 auf.

Zur Befestigung des schichtförmigen Bauteils 4 als der Isolierung 5 an der Wand 3 als dem Setzgegenstand 2 wird zunächst mit einem nicht dargestellten Bohrer in der Wand 3 eine Bohrung hergestellt. Das Herstellen dieser Bohrung ist jedoch optional und kann auch entfallen. Anschließend wird der Bolzen 11 durch eine Einführöffnung 36 an dem Abschlusselement 16 in den Durchführkanal 36 eingeführt und darauffolgend weiter der Setzelementschaft 26 in das zweite Ende 28 der Bohrung 14 eingeführt, bis der Setzelementschaft 26 auf der Wand 3 aufliegt und auch das erste Ende 27 der Öffnung 13 sowie das ersten Ende 38 der Befestigungsvorrichtung 1 auf der Wand 3 aufliegt. Anschließend wird mit einem Setzgerät 29 das Setzelement 8 in den Setzgegenstand 2 so lange eingetrieben, beispielsweise aufgrund der Ausbildung des Setzgerätes 29 als ein Schlaghammer, bis der Haltekopf 9 auf dem Anschlag 23 aufliegt. Aufgrund der Dicke der Isolierung 5 liegt dann auch die erste Seite 19 des Abschlusselements 16 auf einer Außenseite 6 des schichtförmigen Bauteils 4 auf, sodass dadurch das schichtförmige Bauteil 4 zwischen der Wand 3 und der ersten Seite 19 des Abschlusselements 16 form- und/oder kraftschlüssig gehalten ist (Fig. 5).

Die axiale Ausdehnung 31 der Segmente 15 und der Zwischenöffnungen 18 entspricht ungefähr 70 % der axialen Gesamtausdehnung 30 des Befestigungselements 1. Ein Großteil des Schaftes 12 ist somit mittels der Segmente 15 in die Segmente 15 und die Zwischenöffnungen 18 unterteilt. Treten an dem Schaft 12, insbesondere an dem ersten Endbereich 24 des Schaftes 12 während des Befestigens der Setzelemente 8 in der Wand 3, Risse auf führen diese Risse bei einer Fortpflanzung dieser Risse nicht zu einem Versagen des Schaftes 12 insgesamt, da bei einem Riss innerhalb eines Segments 15 sich dieser Riss nicht auf die anderen Segmente 15 in Umfangsrichtung fortpflanzen kann. Ein Versagen des Befestigungselements 1 aufgrund von Rissbildungen ist damit im Wesentlichen ausgeschlossen, weil im Regelfall bei einer Rissbildung nur ein oder maximal zwei Segmente 15 durch die Rissbildung beschädigt sind, sodass weiterhin zwei oder drei tragfähige Segmente 15 vorhanden sind, welche die erforderlichen Zugkräfte von der Außenseite 6 des schichtförmigen Bauteils 4 auf das Setzelement 8 übertragen können. Die axiale Ausdehnung 34 von dem ersten Ende 38 des Befestigungselements 1 bzw. von dem ersten Ende 27 der Bohrung 14 bis zu dem zweiten Ende 33 der Zwischenöffnung 18 ist größer als die axiale Ausdehnung 35 der Öffnung 13 als der Bohrung 14. Dadurch ist konstruktiv gewährleistet, dass aufgrund von Rissbildungen im Wesentlichen kein Versagen des Befestigungselements 1 auftritt.

Insgesamt betrachtet sind mit dem erfindungsgemäßen Befestigungselement 1 wesentliche Vorteile verbunden. Beim Eintreiben des Setzelements 8 in die Wand 3 können von dem Haltekopf 9 größere Kräfte auf den Schaft 12 im Bereich des zweiten Endes 28 der Bohrung 14 übertragen werden. Dies kann zu Rissbildungen an dem ersten Endbereich 24 des Schaftes 12 führen. Der Bereich des Schaftes 12 an dem ersten Ende 27 der Bohrung 14 weist eine große Dicke auf, sodass in diesem Bereich des Schaftes 12 die Risse im Regelfall nicht zu einem Versagen des Befestigungselements 1 führen. Diese Risse können sich jedoch auch an dem übrigen Bereich des Schaftes 12 fortpflanzen. Risse an diesem übrigen Bereich des Schaftes 12 führen jedoch nicht zu einem Versagen des Befestigungselements 1 an dem übrigen Schaft 12, da der übrige Schaft 12 in die Segmente 15 unterteilt ist und somit bei einer Rissbildung an diesem übrigen Teil des Schaftes 12 im Regelfall nur ein oder höchstens zwei Segmente 15 aufgrund der Rissbildung beschädigt sind und auch eine Fortpflanzung der Rissbildung von einem Segment 15 auf ein anderes Segment 15 ausgeschlossen ist. Dadurch weist das Befestigungselement 1 eine ausreichende Anzahl an tragfähigen Segmenten 15 auf. Die Dicke der Segmente 15, das heißt die radiale Ausdehnung der Segmente 15 senkrecht zu der Längsachse 22, ist dahingehend ausgelegt, dass auch nur ein oder zwei Segmente 15 die notwendigen Zugkräfte sicher und zuverlässig aufnehmen können.

## Patentansprüche

1. Befestigungselement (1) zum Befestigen eines schichtförmigen Bauteiles (4), insbesondere einer Isolierung (5), an einem Setzgegenstand (2), insbesondere an einer Wand (3) oder Decke eines Gebäudes, mit einem Setzelement (8), insbesondere einem Nagel (10) oder einer Schraube, das Befestigungselement (1) umfassend:
einen Schaft (12),
eine Öffnung (13) zur Aufnahme des Setzelementes (8),
einen Anschlag (23) zur formschlüssigen Befestigung des Setzelementes (8),
ein Abschlusselement (16) zur Auflage auf eine Außenseite (6) des schichtförmigen Bauteiles (4),
wobei der Schaft (12) und das Abschlusselement (16) einteilig ausgebildet sind,
**dadurch gekennzeichnet, dass**
der Schaft (12) wenigstens zwei Segmente (15) umfasst und zwischen den wenigstens zwei Segmenten (15) je eine Zwischenöffnung (18) ausgebildet ist.

2. Befestigungselement nach Anspruch 1,
**dadurch gekennzeichnet, dass**
die wenigstens eine Zwischenöffnung (18) als ein Schlitz (21) ausgebildet ist.

3. Befestigungselement nach Anspruch 2,
**dadurch gekennzeichnet, dass**
der wenigstens eine Schlitz (21) und/oder die wenigstens zwei Segmente (15) im Wesentlichen parallel zu einer Längsachse (22) des Schaftes (12) ausgebildet ist bzw. sind.

4. Befestigungselement nach einem oder mehreren der vorhergehenden Ansprüche,
**dadurch gekennzeichnet, dass**
der Schlitz (21) durchgehend ausgebildet ist, so dass in einem Schnitt senkrecht zu der Längsachse (22) des Schaftes (12) keine Verbindung zwischen den Segmenten (15) vorhanden ist
und/oder
der Schaft (12) wenigstens drei oder vier Segmente (15) umfasst.

5. Befestigungselement nach einem oder mehreren der vorhergehenden Ansprüche,
**dadurch gekennzeichnet, dass**
die Öffnung (13) und/oder der Anschlag (23) an dem Schaft (12), insbesondere an einem ersten Endbereich (24) des Schaftes (12), ausgebildet sind.

6. Befestigungselement nach einem oder mehreren der vorhergehenden Ansprüche,
**dadurch gekennzeichnet, dass**
das Abschlusselement (16) an einem zweiten Endbereich (25) des Schaftes (12) mit dem Schaft (12) verbunden ist.

7. Befestigungselement nach einem oder mehreren der vorhergehenden Ansprüche,
**dadurch gekennzeichnet, dass**
das Abschlusselement (16) als ein tellerförmiges Auflageteil (17) ausgebildet ist.

8. Befestigungselement nach einem oder mehreren der vorhergehenden Ansprüche,
**dadurch gekennzeichnet, dass**
die Öffnung (13) als eine Bohrung (14) zur Aufnahme eines Setzelementschaftes (26) ausgebildet ist und ein erstes Ende (27) der Bohrung (14) an einem ersten Ende (38) des Befestigungselementes (1) ausgebildet ist und im Bereich eines zweites Ende (28) der Bohrung (14) der Anschlag (23) ausgebildet ist.

9. Befestigungselement nach einem oder mehreren der vorhergehenden Ansprüche,
**dadurch gekennzeichnet, dass**
die axiale Ausdehnung (31) der wenigstens zwei Segmente (15) und/oder der wenigstens einen Zwischenöffnung (18) wenigstens 10%, 20%, 30%, 50%, 60%, 70% oder 80% der axialen Gesamtausdehnung (30) des Befestigungselementes (1) beträgt.

10. Befestigungselement nach einem oder mehreren der vorhergehenden Ansprüche,
**dadurch gekennzeichnet, dass**
die wenigstens eine Zwischenöffnung (18) ein erstes Ende (32) und ein zweites Ende (33) aufweist und das erste Ende (32) ein dem Abschlusselement (16) abgewandtes Ende ist und das zweite Ende (33) ein dem Abschlusselement (16) zugewandtes Ende der wenigstens einen Zwischenöffnung (18) ist.

11. Befestigungselement nach Anspruch 10,
**dadurch gekennzeichnet, dass**
die axiale Ausdehnung (34) von dem ersten Ende (38) des Befestigungselementes (1) bis zu dem zweiten Ende (33) der wenigstens einen Zwischenöffnung (18) größer oder gleich ist als die axiale Ausdehnung (35) der Öffnung (13).

12. Befestigungselement nach Anspruch 10 oder 11,
**dadurch gekennzeichnet, dass**
die axiale Ausdehnung (34) von dem ersten Ende (38) des Befestigungselementes (1) bis zu dem zweiten Ende (33) der wenigstens einen Zwischenöffnung (18) größer ist als das 1,2-, 1,5 oder 2-Fache der axialen Ausdehnung (35) der Öffnung (13).

13. Befestigungselement nach einem oder mehreren der vorhergehenden Ansprüche,
**dadurch gekennzeichnet, dass**
an dem Abschlusselement (16), insbesondere einem Zentrumsbereich des Abschlusselementes (16), eine Einführöffnung (36) zur Einführung des Setzelementes (8) ausgebildet ist
und/oder
innerhalb des Schaftes (12) ein von den wenigstens zwei Segmenten (15) begrenzter Durchführkanal (37) zur Durchführung des Setzelementes (8) ausgebildet ist.

14. Befestigungselement nach einem oder mehreren der vorhergehenden Ansprüche,
**dadurch gekennzeichnet, dass**
das gesamte Befestigungselement (1) einteilig ausgebildet ist
und/oder
das Befestigungselement (1), insbesondere ausschließlich, aus, vorzugsweise thermoplastischen, Kunststoff ausgebildet ist.

15. Verfahren zum Befestigen eines schichtförmigen Bauteiles (4), insbesondere einer Isolierung (5), an einem Setzgegenstand (2), insbesondere an einer Wand (3) oder Decke eines Gebäudes, mit einem Befestigungselement (1) und einem Setzelement (8) mit den Schritten:
Durchführen eines Setzelementes (8) durch eine Einführöffnung (36) an einem Abschlusselement (16) des Befestigungselementes (1),
Durchführen eines Setzelementschaftes (26) durch eine Öffnung (13) des Befestigungselementes (1),
Befestigen des Befestigungselementes (1) an dem Setzgegenstand (2) indem ein Setzelement (8) in dem Setzgegenstand (2) befestigt wird und
das Setzelement (8) formschlüssig an einem Anschlag (23) des Befestigungselementes (1) befestigt wird,
Auflegen einer ersten Seite (19) des Abschlusselementes (16) auf eine Außenseite (6) des schichtförmigen Bauteiles (4), so dass das schichtförmige Bauteil (4) von dem Abschlusselement (16) formschlüssig gehalten ist,
**dadurch gekennzeichnet, dass**
das Verfahren mit einem Befestigungselement (1) gemäß einem oder mehrerer der vorhergehenden Ansprüche ausgeführt wird.
